# EUROPÄISCHE PATENTANMELDUNG

(11) **EP 1 080 877 A2**
(43) Veröffentlichungstag der Anmeldung: **07.03.2001**
(21) Anmeldenummer: 00810276.6
(22) Anmeldetag: 31.03.2000
(51) Int. Cl.: B32B 7/00, B32B 27/00

(54) **Folie zur Verpackung kleinerer Gegenstände**

(30) Priorität: 03.09.1999 IT MI991864
(71) Anmelder: Alusuisse Technology & Management AG, 8212 Neuhausen am Rheinfall (CH)
(72) Erfinder: Fuganti, Giovanni, 20020 Arese (MI) (IT)

(57) **Zusammenfassung**

Folie zur Verpackung kleinerer Gegenstände, wie beispielsweise Bonbons, Süssigkeiten, Lollipops (Lollis), Schleckstengel, Lutscher, an einem Stiel, Stengel, Halter, durch Umwicklung des Gegenstandes mit der Folie mit einer siegelbaren Schicht zur Erzeugung eines Klebverschlusses und Sicherung der Verpackung mittels eines Dreheinschlages im Bereich des Stiels, Stengels oder Halters,.

Dazu weist eine Trägerfolie auf der zum verpackten Gegenstand gerichteten Seite eine siegelbare und insbesondere heisssiegelbare, Schicht (11) auf, die ausserhalb des für den zu verpackenden Gegenstand vorgesehenen Umwicklungsbereiches (12) und um den Umwicklungsbereich (12) herum angeordnet ist.

## Beschreibung

Vorliegende Erfindung betrifft eine Folie zur Verpackung kleinerer Gegenstände durch Umwicklung des Gegenstandes mit der Folie und Sicherung mittels eines Dreheinschlages, mit einer siegelbaren Schicht zur Erzeugung eines Klebeverschlusses, ein Verfahren zu deren Herstellung und deren Verwendung.

Zur Verpackung einzelner kleiner Gegenstände wie Bonbons, Kaugummi und dgl. Kleinwaren ist es bekannt, den Gegenstand mit einer Folie zu umwickeln und anschliessend die offenen Enden der im wesentlichen zylindrischen Umwicklung unter Ausbildung eines sogenannten Dreheinschlages durch Drehen oder Wrappen zu verschliessen.

Voraussetzung für die Anwendung des Dreheinschlages ist die mechanische Eignung der Folie, die an den Drehstellen nicht ein- oder abreissen darf. Eine mehrschichtige Folie der eingangs genannten Art zur Verwendung als Verpackung unter Ausbildung eines Dreheinschlages ist in der EP-A-0217388 offenbart. Die ein- oder beidseitig auf eine Basisfolie aus Polypropylen aufgebrachten Deckschichten können beispielsweise als heiss- oder kaltsiegelbare Schichten ausgebildet sein.

Der vorliegenden Erfindung liegt die Aufgabe zugrunde, eine Folie der eingangs genannten Art zu schaffen, die einen sicheren gesiegelten Verschluss mittels eines Dreheinschlag ermöglicht. Die Folie soll zudem einfach und kostengünstig herstellbar sein.

Zur erfindungsgemässen Lösung der Aufgabe führt, dass die siegelbare Schicht (11) ausserhalb des für den zu verpackenden Gegenstand vorgesehenen Umwicklungsbereich (12) und um den Umwicklungsbereich (12) auf einer Trägerfolie (10) angeordnet ist.

Mit der erfindungsgemässen Anordnung der siegelbaren Schicht wird ein direkter Kontakt mit dem Verpackungsgut vermieden. Durch die siegelbare Schicht lokal begrenzte Klebefläche ergibt sich ein ausreichend sicherer Verschluss, der bei unbeabsichtigtem Aufdrehen der Verpackung ein Herauslösen des Verpackungsgutes verhindert, andererseits aber ein einfaches Öffnen der Verpackung ohne grossen Kraftaufwand ermöglicht.

Geeignete Materialien für die siegelbare Schicht sind beispielsweise heisssiegelfähige Schichten oder Lacke, enthaltend oder bestehend aus Ethylen-Hompolymerisate, Copolymerisate aus Polypropylen als Hauptkomponente und Ethylen, Copolymerisate aus Polypropylen und Buten- (1), Terpolymerisate aus Propylen, Ethylen und einem Alphaolefin mit 4 bis 10 C-Atomen oder Vinylacrylpolymere, Acrylpolymere oder Epoxydlacke oder acrylhaltige Siegelmassen oder acrylhaltige Siegellacke.

Die Siegeltemperatur kann beispielsweise bei 180°C bis 230°C und vorzugsweise bei 200°C bis 220°C liegen. Die siegelbare Schicht kann z.B. in Mengen von 1 bis 7 g/m², zweckmässig von 1,5 bis 5 g/m² und insbesondere von 3 bis 5 g/m² aufgebracht werden.

Als Trägerfolien können z.B. Folien aus thermoplastischen Kunststoffen, insbesondere aus Polyestern, eingesetzt. Die Dicke der Trägerfolie kann z.B. 8 bis 180 µm, zweckmässig 8 bis 80 µm, vorteilhaft 8 - 30 µm und insbesondere 8 - 25 µm betragen, wobei Trägerfolien in einer Dicke von 12 µm ganz besonders bevorzugt sind.

Beispiele von Polyestern für Polyesterfolien sind Polyalkylenterphthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B,. 1 bis 10 Mol-% beträgt, Mischpolymere und Terpolymere, sowie Blockpolymere und gepfropfte Modifikationen oben genannter Stoffe. Auch geeignet sind die Polyethylenterephthalate mit den Bezeichnungen PETP, A-PET und G-PET.

Die Trägerfolie kann eine Monofolie sein oder kann eine Verbundfolie aus zwei oder mehreren Folien, die gegenseitig durch Koextrusion oder Kaschieren verbunden sind, sein.

Die erfindungsgemässe Folie kann wie folgt aufgebaut sein:
- fallweise eine vollflächige oder teilweise dekorative Bedruckung
- eine Trägerfolie aus einem thermoplastischen Kunststoff
- fallweise ein dekorativer vollflächiger oder teilweiser Konterdruck
   und
- eine partiell ausserhalb des Umwicklungsbereiches aufgetragene siegelbare Schicht.

Die siegelbare Schicht ist insbesondere an einer Verpackung auf der gegen den Inhalt gerichteten Seite angeordnet. Der Umwicklungsbereich ist im wesentlichen frei von der siegelbaren Schicht. Die siegelbare Schicht kann beispielsweise eine um einen Umwicklungsbereich angeordnete Schicht darstellen. Der Umwicklungsbereich ist insbesondere endlos von der siegelbaren Schicht umgeben. Der Umwicklungsbereich kann auch nur partiell von der siegelbaren Schicht umgeben sein.

Der Umwicklungsbereich kann rund, oval oder polygonal sein. Der siegelbare Bereich kann ausserhalb des Umwicklungsbereich ringförmig angeordnet sein oder kann bis an die Begrenzungen der Trägerfolie, resp. an die Seitenränder eines Materialzuschnittes, reichend, angeordnet sein.

Fallweise kann die Trägerfolie eine Sperrschicht enthalten Die Sperrschicht gegen Gase, Dämpfe und Feuchtigkeit kann durch eine Metallfolie aus beispielsweise Stahl oder Aluminium gebildet sein. Andere geeignete Materialien für Sperrschichten sind beispielsweise Folien aus Kunststoffen, wie Polyvinylidenchlorid oder Ethyl-Vinyl-Alkohol, oder eine Schicht aus keramischen Materialien, wie beispielsweise aus Silizium- oder Aluminiumoxid bzw. -nitrid, die in dünner Schicht, z.B. im Bereich von 10 - 500 nm (Nanometer), im Vakuum auf eine Trägerfolie abgeschieden worden sind. Beispiele weiterer Sperrschichten sind metallische Schichten, z.B. aus Aluminium, die durch Sputtern auf dem Träger abgeschieden werden.

Auf der an einer Verpackung nach aussen weisenden Seite der Folie ist üblicherweise eine Bedruckung angeordnet. Das Bedrucken der Folie kann mit allen bekannten Druckverfahren vorgenommen werden, so z.B. Buch-, Offset-, Fiexo-, Sieb-, Helio- und Kupfertiefdruck, aber auch mittels Laserdruck, Inkjet, elektrophotographischen und magnetographischen Druckverfahren. Die Wahl, welches Druckverfahren zur Anwendung kommt, hängt von der gewünschten Druckqualität, von den jeweiligen technischen Gegebenheiten und der Auflagenhöhe ab. Das Druckbild wird gegebenenfalls mit einem Schutzlack (release lack) überzogen. Ein Konterdruck auf der Trägerfolie ist ebenfalls möglich.

Die siegelbare Schicht kann beispielsweise durch Sprühen, Streichen, Rakeln, usw. eines lösemittelhaltigen oder lösemittelfreien Siegellackes auf die Trägerfolie aufgebracht werden.

Die Siegelschicht ist auch in Form eines Druckbildes auf der Trägerfolie aufbringbar. Die Siegelschicht kann z.B. im gleichen oder einem vorangestellten oder hintennachgestellten Druckwerk, in dem ein aussenseitiges Druckbild erzeugt wird, auf die Trägerfolie aufgebracht werden. Die Siegelschicht kann vorteilhaft auch aus einem Primer und/oder Haftvermittler und einem Siegellack sein oder kann nur aus einem Siegellack sein. Der Haftvermittler, resp. Der Primer, und der Siegellack werden nacheinander oder der Siegellack allein, in einem Druckwerk, beispielsweise durch einen Buch-, Offset-, Flexo-, Sieb-, Helio-, Tief- oder Kupfertiefdruck, vorzugsweise durch einen Fiexo- oder Heliodruck, auf die Trägerfolie aufgebracht. Der Siegellack wird demnach wie eine Druckfarbe, gegebenenfalls mittels eines Lösemittels verarbeitet.

Das Verfahren wird derart ausgeführt, dass die nach aussen weisende Siegelschicht mittels eines Druckverfahrens auf die Trägerfolie angebracht wird, wobei das Druckbild den Umwicklungsbereich vollständig oder partiell umgibt.

In der Praxis wird die Trägerfolie vorteilhaft als Endlos- oder Rollenware eingesetzt und entsprechend die Bearbeitungsschritte, wie z.B. das aussenseitige Bedrucken und das innenseitige Auftragen der Siegelschicht in kontinuierlichen Prozessen durchgeführt. Die derart vorbereitete Trägerfolie kann in Materialzuschnitte, die einem einzelnen Einwickler, resp. einem Einwickler für einen kleinen Gegenstand, entsprechen, zugeschnitten werden. Die Materialzuschnitte können polygonal, rund oder oval sein, wobei rechteckige oder quadratische Materialzuschnitte bevorzugt werden.

Der bevorzugte Anwendungsbereich der erfindungsgemässen Folie liegt in der Verpackung von kleinen Gegenständen wie Süssigkeiten, Bonbons, Lollipops (Lollis), Schleckstengel, Lutscher am Stiel, und dgl. Kleinwaren mit einem Stiel, Stengel, Halter, mittels eines Dreheinschlag. Vorteilhaft befindet sich ein einziger Dreheinschlag im Bereich des Stiels, Stengels oder Halters. Gegebenenfalls kann ein weiterer Dreheinschlag z.B. am dem Stiel, Stengel oder Halter entgegenliegenden Ende des kleinen Gegenstandes angeordnet sein.

Zum Verpacken wird der z.B. mit einem einseitig abragenden Stiel, Stengel oder Halter versehene kleine Gegenstand mit einem Materialzuschnitt überdeckt, wobei der vorgesehene Umwicklungsbereich, der ohne siegelbare Schicht ist, auf den kleinen Gegenstand, wie eine Süssigkeit etc., zu liegen kommt und der mit der siegelbaren Schicht versehene Teil des Materialzuschnittes durch Eindrehen (Verzwirbeln) entlang dem Stiel den kleinen Gegenstand einschliesst und in der eingedrehten (verzwirbelten) Form durch eine Wärme- und/oder Druckbehandlung die siegelbare Schicht versiegelt wird. Die Siegeltemperatur kann beispielsweise von 180°C - 230°C, zweckmässig 200°C - 200°C, betragen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Draufsicht auf einen Materialzuschnitt
- Fig. 2: eine Draufsicht auf ein Folienband aus einer Vielzahl von Materialzuschnitten gemäss Fig. 1
- Fig. 3: die Ansicht eines mit dem Materialzuschnitt von Fig. 1 umwickelten kleinen Gegenstandes.

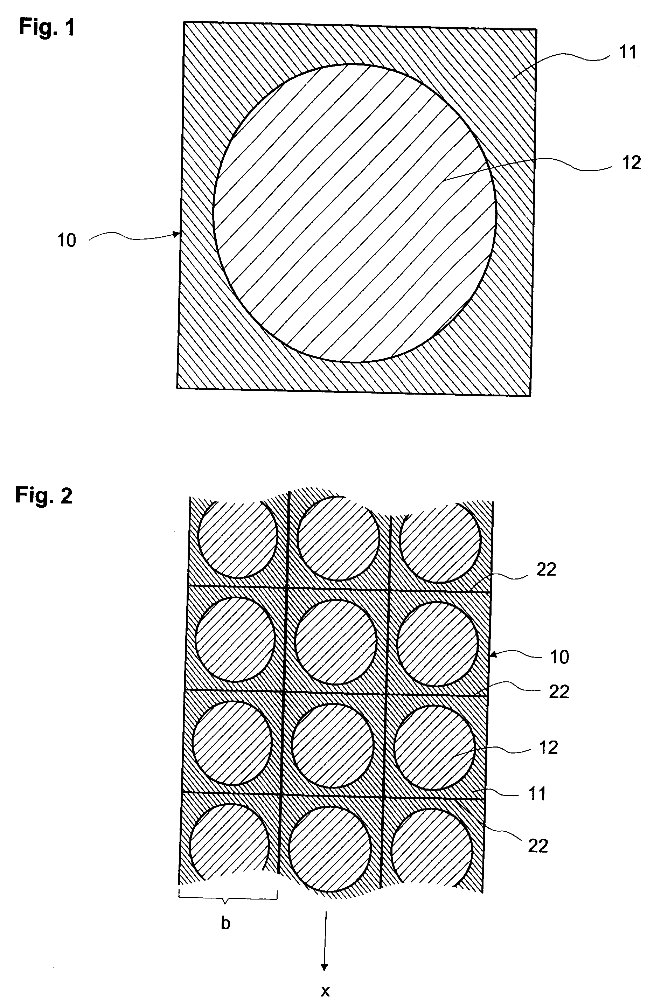

Ein in Fig. 1 gezeigter quadratischer Materialzuschnitt enthält eine Trägerfolie 10 aus z.B. Polyester einer Dicke von beispielsweise 12 µm. An der Trägerfolie 10 ist ein Umwicklungsbereich 12 für den zu verpackenden Gegenstand 15 vorhanden. Den randseitigen Abschluss bildet eine auf die Trägerfolie 10 aufgetragene siegelbare Schicht 11.

Der Materialzuschnitt der Trägerfolie 10 kann beispielsweise eine Seitenkantenlänge oder Durchmesser von 60 bis 180 mm aufweisen. Der Umwicklungsbereich 12 weist vorteilhaft eine Kantenlänge oder einen Durchmesser auf, derart, dass der Umwicklungsbereich 12 ca. 30 bis 80 %, vorzugsweise 40 bis 60 % der Gesamtfläche des Materialzuschnittes betrifft.

Das Aufbringen der siegelbaren Schicht 11 auf der Trägerfolie 10 erfolgt z.B. kontinuierlich in einer Druckmaschine. Hierbei wird eine bandförmige Trägerfolie 10 einer in der Zeichnung nicht dargestellten Druckmaschine von einer Rolle zugeführt und in der Druckmaschine kontinuierlich mit der siegelbaren Schicht 11 bedruckt. Nach dem Auftragen der siegelbaren Schicht 11 wird die Trägerfolie 10 z.B. wieder zu einer Rolle aufgewickelt.

Selbstverständlich ist es auch möglich, die Trägerfolie 10 in einer mehrere Streifenbänder umfassenden Breite herzustellen (Fig. 2) und den Zuschnitt auf die Endbreite b der einzelnen bandförmigen Trägerfolien 10 in einem weiteren Arbeitsschritt vorzunehmen.

Der endgültige Zuschnitt der bandförmigen Trägerfolie 10 zu einzelnen Materialzuschnitten durch senkrecht zur Bandlaufachse x angeordnete Schnittlinien 22 erfolgt üblicherweise direkt vor oder in der Verpackungsmaschine.

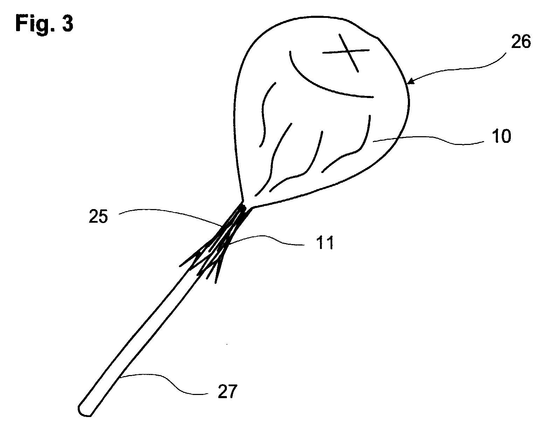

Fig. 3 zeigt einen kleinen Gegenstand 26 in der Form eines Lutschers mit Stiel nach dessen Umwicklung mit einem Materialzuschnitt aus der Trägerfolie 10 um den vom Bonbon abragenden Stiel 27. Die im wesentlichen kugelige Umwicklung wird durch Eindrehen 25 und anschliessender Wärme- und Druckbehandlung des eingedrehten Endes im Bereich des Siegelrandes 11 (siehe Fig. 1) verschlossen.

## Patentansprüche

1. Folie zur Verpackung kleinerer Gegenstände durch Umwicklung des Gegenstandes mit der Folie und Sicherung mittels eines Dreheinschlages, mit einer siegelbaren Schicht zur Erzeugung eines Klebverschlusses,
dadurch gekennzeichnet, dass
die siegelbare Schicht (11) ausserhalb des für den zu verpackenden Gegenstand vorgesehenen Umwicklungsbereiches (12) und um den Umwicklungsbereich (12) auf einer Trägerfolie (10) angeordnet ist.

2. Folie nach Anspruch 1, dadurch gekennzeichnet, dass die siegelbare Schicht (11) den Umwicklungsbereich (12) endlos umgibt.

3. Folie nach Anspruch 1, dadurch gekennzeichnet, dass die siegelbare Schicht (11) eine Siegelmasse, enthaltend oder bestehend aus Vinylacrylpolymeren, Acrylpolymeren oder Epoxydlacken, vorzugsweise mit einer Siegeltemperatur von 180°C bis 230°C, aufweist.

4. Folie nach Anspruch 1, dadurch gekennzeichnet, dass sie den Aufbau aufweist, enthaltend:
- eine Trägerfolie (10) aus einem thermoplastischen Kunststoff,
und
- eine auf die Trägerfolie (10), vorzugsweise als Druckbild, partiell aufgetragene siegelbare Schicht (11),

5. Folie nach Anspruch 1, dadurch gekennzeichnet, dass die Trägerfolie (10) eine Polyesterfolie, vorzugsweise in einer Dicke von 8 bis 180 µm, ist.

6. Verfahren zur Herstellung einer Folie nach Anspruch 1, dadurch gekennzeichnet, dass die siegelbare Schicht (11) mittels einer Druckmaschine auf die Trägerfolie (10) aufgetragen wird.

7. Verfahren nach Anspruch 6, dadurch gekennzeichnet, dass die Trägerfolie (10) der Druckmaschine als Band von einer Rolle zugeführt, kontinuierlich mit der siegelbaren Schicht (11) bedruckt und nach dem Auftragen der siegelbaren Schicht (11) wieder zu einer Rolle aufgewickelt wird.

8. Verwendung einer Folie nach Anspruch 1 zur Verpackung von kleinen Gegenständen, zweckmässig Bonbons, Süssigkeiten, Lollipops (Lollis), Schleckstengel, Lutscher, an einem Stiel, Stengel, Halter, mittels eines Dreheinschlages.
